# EUROPEAN PATENT APPLICATION

(11) **EP 3 166 282 A1**
(43) Date of publication of application: **10.05.2017**
(21) Application number: 15306754.1
(22) Date of filing: 05.11.2015
(51) Int. Cl.: H04L 29/08

(54) **METHOD FOR WAKING UP A COMMUNICATION DEVICE, METHOD FOR PROVIDING A WAKE UP SERVICE, AND CORRESPONDING COMMUNICATION DEVICES, SYSTEM, COMPUTER READABLE PROGRAM PRODUCTS AND COMPUTER READABLE STORAGE MEDIA**

(71) Applicant: Thomson Licensing, 92130 Issy-les-Moulineaux (FR)
(72) Inventor: JEANNE, Ludovic, 35576 Cesson-Sévigné (FR); LE GOUE, Yvon, 35576 Cesson-Sévigné (FR); GRAEF, Lucien, 35576 Cesson-Sévigné (FR)
(74) Representative: Huchet, Anne

(57) **Abstract**

The present disclosure relates to a communication device waking up method, performed by a communication device belonging to a communication network, and applied to a device adapted to work in an operational mode and a sleeping mode where the communication device is partially inactive. The waking up method includes a transition from said sleeping mode to an operational mode when receiving a waking up order from another device on the communication network. The method further includes:
Subscribing to at least one waking up service associated with the waking up item and When entering in the sleeping mode, storing at least one first contextual information related to at least one first action to be performed when the waking up order is received.

## Description

### 1. Technical field

The present disclosure relates to the field of network-based waking up of a communication device.

A method for waking up a communication device, method for providing a wake up service, and corresponding communication devices, system, computer readable program products and computer readable storage media are described.

### 2. Background art

More and more communication devices are widely used in day-to-day life. Many devices (for instance a set top box (STB), a gateway (GTW), a TV display, a Blu-ray player, a tablet, a smartphone, a personal computer) often need to be always powered-on, even if not being in use. Indeed, they often need to be able to react immediately to events (like incoming events received form a communication interface or a user interface).

However, this requirement is very power consuming. This power consumption can become a major drawback for wireless devices. Some mechanisms for reducing the power consumption of a powered-on device have been developed. For instance, the Wake on Local Area Network (WoL) mechanism has been proposed for waking-up a device through an Internet Protocol (IP) or Ethernet network. According to a solution proposed by AMD (Advanced Micro Services, Inc.) or Hewlett Packard Inc., such mechanism is based on the receiving, by a network interface still awaken when other parts of a device are in a sleeping mode, of a specific pattern constituting an order for waking up the device.

The specific pattern (also called "magic packet") is an Ethernet or IP frame that contains a specific content. This content can be located anywhere in the frame. It usually includes a Media Access Control (MAC) address, referring to the "data link layer" (also called "level 2 layer") of the Open Systems Interconnection (OSI) model, of the recipient device. The MAC address included in the specific pattern is usually the own MAC address of the communication device to be awaken.

An enhancement of this solution has been implemented by the use of a given multicast address, instead of a unicast address, in order for a device initiating a waking up order to wake up several communication devices at the same time.

Yet, there's a need to provide a more flexible solution, notably a solution that improves the user experience of a user of a communication device compared to prior art solutions.

### 3. Summary

The present principles enable at least one of the above disadvantages to be resolved by proposing a waking up method, to be performed in a communication device belonging to a communication network, said communication device being adapted to work in an operational mode and a sleeping mode where said communication device is partially inactive, a transition from said sleeping mode to said operational mode being performed when said communication device receives a waking up order comprising a waking up item from said communication network.

According to some embodiments of the present disclosure, said method being characterized in that it comprises:
- subscribing to at least one waking up service associated with said waking up item;
- when entering in said sleeping mode, storing at least one first contextual information related to at least one first action to be performed when said waking up order is received.

According to an embodiment of the present disclosure, said waking up item is a MAC address, notably a multicast MAC address.

The waking up order can be a multicast frame containing a particular pattern based on the waking item and its content field, for instance a pattern comprising a repetition of the waking up item and a particular motif (like "FFFF").

According to some embodiments of the present disclosure, said method comprises moving to said operational mode when a waking up order comprising said waking up item is received, said moving comprising performing said first action according to said stored first contextual information.

According to an embodiment of the present disclosure, a waking up service is associated to a unique waking up criterion.

According to an embodiment of the present disclosure, a waking up service is associated to a plurality of waking up criteria and a unique waking up item is received for the plurality of waking up criteria.

According to an embodiment of the present disclosure, said waking up item is received inside a frame comprising a specific pattern based on said waking up item, notably a pattern based on a repetition of said waking up item.

According to some embodiments of the present disclosure, said subscribing is performed when entering in said sleeping mode.

According to some embodiments of the present disclosure, said subscribing comprises preparing the routing of said waking up order inside said network.

According to some embodiments of the present disclosure, said preparing comprises sending an Internet Group Management Protocol (IGMP) join message.

According to some embodiments of the present disclosure, said method comprises sending a waking up request comprising said waking up criterion.

According to some embodiments of the present disclosure, said method comprises, prior to said subscribing, receiving said waking up item.

According to some embodiments of the present disclosure, said moving comprises requesting at least one second contextual information.

According to some embodiments of the present disclosure, said moving comprises receiving at least one second contextual information.

According to some embodiments of the present disclosure, said moving comprises performing at least one second action according to said received second contextual information.

According to another aspect, the present disclosure relates to a communication device adapted to work in an operational mode and in a sleeping mode where at least one first module of said communication device is inactive.

According to some embodiments of the present disclosure, said communication device comprises:
- a frame analyzer adapted to:
   - detect at least one waking up item in at least one frame received from at least one communication interface of said communication device;
   - send a signal for waking up said first module when said wake up item is detected and said communication device is in said sleeping mode; and
- at least one processor configured to collectively :
   - subscribe to at least one waking up service associated with said waking up item;
   - store, when said communication device enters in said sleeping mode, at least one first contextual information related to at least one first action to be performed when said waking up order is received.

Depending upon embodiments, the processor can be comprised either in the frame analyzer, in the first module or in a second module of communication device.

While not explicitly described, the communication device of the present disclosure can be adapted to perform the waking up method of the present disclosure in any of its embodiments.

According to another aspect, the present disclosure relates to a method for providing a waking up service, to be performed in a communication device belonging to a communication network, said method comprising:
- receiving a request of subscribing to at least one waking up service associated with a waking up criterion and with a waking up item;
- sending a waking up order comprising said waking up item on said communication network when said waking up criterion is fulfilled.

According to some embodiments of the present disclosure, said method comprises, prior to said sending of said waking up order, receiving said waking up criterion.

According to another aspect, the present disclosure relates to a communication device for providing a waking up service, said communication device belonging to a communication network and comprising at least one processor configured collectively to:
- receive a request of subscribing to at least one waking up service associated with a waking up criterion and with a waking up item;
- send said waking up order on said communication network when said waking up criterion is fulfilled;

According to some embodiments of the present disclosure, said at least one processor is configured collectively for receiving said waking up criterion, prior to said sending of said waking up order.

While not explicitly described, the communication device of the present disclosure can be adapted to perform the method for initiating a waking up order of the present disclosure in any of its embodiments.

It is to be noted that in some embodiment, both methods of the present disclosure can be performed on the same device. In such an embodiment, the device can be awaked thanks to a fist device and can in turn wake up a second device.

According to another aspect, the present disclosure relates to a system, comprising a least one first and one second communication device belonging to at least one communication network, for providing a waking service to said first communication device thanks to said second communication device, said first communication device being adapted to work in an operational mode and in a sleeping mode where at least one first module of said first communication device is inactive, and said second communication device comprising at least one second processor configured collectively to:
- receive a request of subscribing to at least one waking up service associated with a waking up criterion and with a waking up item;
- send said waking up order on said communication network when said waking up criterion is fulfilled;

According to some embodiments of the present disclosure, said first communication device comprises:
- a frame analyzer adapted to:
   - detect said waking up item in at least one frame received from at least one communication interface of said first communication device;
   - send a signal for waking up said first module when said wake up item is detected and said first communication device is in said sleeping mode; and
- at least one first processor configured to collectively :
   - subscribe to said waking up service;
   - store, when said communication device enters in said sleeping mode, at least one first contextual information related to at least one first action to be performed when said waking up order is received; and
said at least one second processor is configured collectively to receive said waking up criterion, prior to said sending of said waking up order.

While not explicitly described, the first communication device of the present disclosure can be adapted to perform the waking up method of the present disclosure in any of its embodiments and/or the second communication device of the present disclosure can be adapted to perform the method for initiating a waking up order of the present disclosure in any of its embodiments.

While not explicitly described, the present embodiments related to a waking up method or to a method for generating a waking up service, and to the corresponding communication devices and system, can be employed in any combination or sub-combination. For example, some embodiments of the waking-up method can involve sending a waking up criterion and receiving a waking up item.

According to another aspect, the present disclosure relates to a non-transitory program storage device, readable by a computer.

According to an embodiment of the present disclosure, said non-transitory computer readable program product tangibly embodies a program of instructions executable by a computer to perform at least one of the methods of the present disclosure in any of its embodiments.

According to another aspect, the present disclosure relates to a computer readable storage medium carrying a software program comprising program code instructions for performing to perform at least one of the methods of the present disclosure, in any of its embodiments, when said non transitory software program is executed by a computer.

### 4. List of drawings

The present disclosure will be better understood, and other specific features and advantages will emerge upon reading the following description, the description making reference to the annexed drawings wherein:
- Figure 1 shows an example of a communication system according to a particular embodiment;
- Figure 2 is a functional diagram that illustrates a particular embodiment of the waking up method of the present disclosure, compatible with the embodiment illustrated by Figure 1; and
- Figure 3 illustrates a communication device adapted to at least one particular embodiment;
- Figure 4 is a functional diagram that illustrates a particular embodiment of the method for providing a waking up service of the present disclosure, compatible with the embodiment illustrated by Figure 1.

It is to be noted that the drawings have only an illustration purpose and that the embodiments of the present disclosure are not limited to the illustrated embodiments shown in the drawings.

### 5. Detailed description of the embodiments

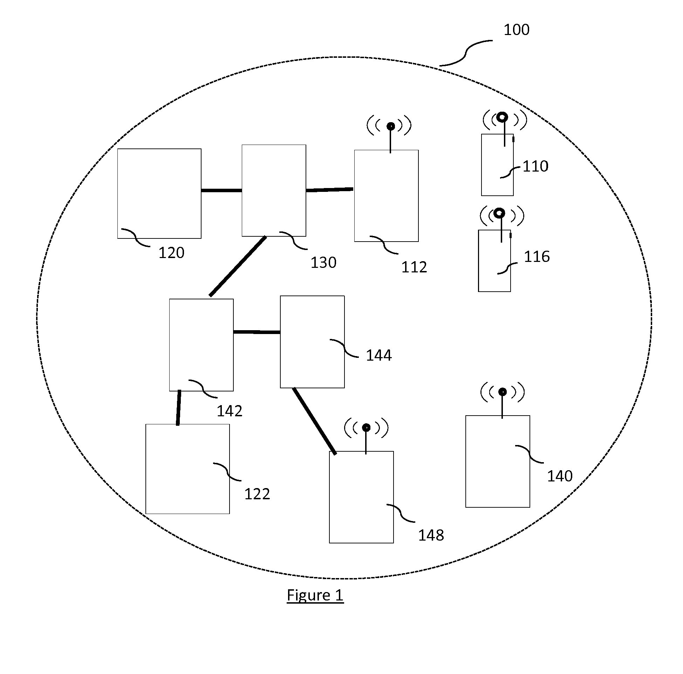

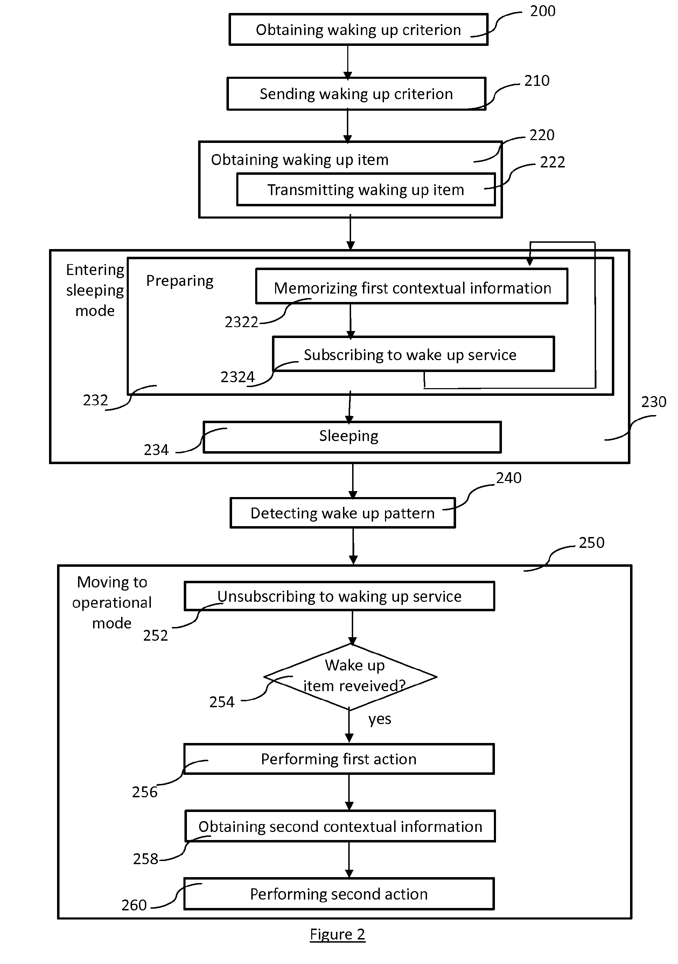

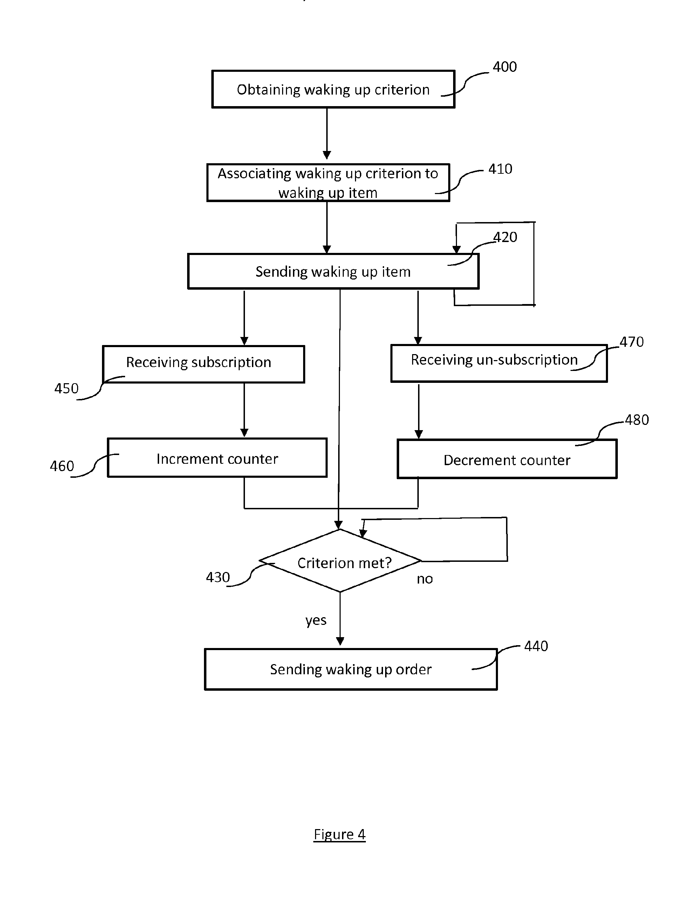

At least one embodiment of the present disclosure offers a new way of waking up at least one first communication device, from a second communication device acting as a provider to a waking up service and belonging to the same communication network (illustrated by figure 1). The first and/or the second device can notably be a tablet, a smart phone, a connected watch, a personal computer, a server, and the like. The first communication device implements the method illustrated by figure 2, and the second communication device, that provides the waking up service to the first communication device, implement the method illustrated by figure 4.

More precisely, as illustrated by Figure 1, the disclosure implements a network based wake-up solution, to be performed between at least two communication devices of a communication network 100, that enables the awaking of at least one first communication device 110, 116, 140 being in a sleeping state, by using an awakening capability of a second communication device 120, 122 tailored by a waking up criterion known from this second device. The awakening is performed by sending to the first device of a particular pattern comprising a particular waking up item, known by the first device. In a particular embodiment, the waking item has been previously defined dynamically between the first and second device.

Notably, the first communication device can receive different waking up orders, comprising different waking up items and provided by different communication devices 120, 122 having different awaking capabilities. This permits the performance of different actions, or behaviors, at the first communication device side, at the time of the waking up, depending upon the waking item received by the first communication device. According to some embodiments, the action to be performed depends from at least one contextual information that has been stored in relation with the waking up item.

Depending upon embodiments, the contextual information can be stored locally by the first communication device, or stored remotely on the second communication device or on another communication device, and retrieved by the first communication device by a request to the second or other communication device.

For instance, the particular pattern can include at least one transmission packet, the transmission packet comprising at least one waking up item being a Multicast Mac address located in the "Target" MAC field. As an example, the transmission packet can include seven occurrences of the waking up item.

It is to be noted that a first device can be awaken by a second device and that the first device can also itself awake a third device. The waking up of a third device can be for instance one of the actions performed by the first communication device at the time it is awakened. The second device can also awake several devices thanks to a unique waking up order (the waking up order being sent in multicast for instance). Also, the first communication device can receive waking up order from different communication devices 120, 122 providing a waking up service.

For a network manager, or an Operator, one advantage of this disclosure can be to reduce the traffic and complexity of messages carried by the network in order to manage a plurality of communication devices being adapted to switch between a "low power", or "sleeping", mode and a normal, also called operational or active, mode.

At the point of view of a user or a provider of a communication device to be awakened, some embodiments of the present disclosure can offer the possibility to define a WOL behavior of the device tailored to its need.

In the detailed embodiment illustrated in Figure 1, a wide area network (WAN) 100 is described.

The network 100, for instance a broadband network, notably includes at least one first communication device 110, 116, 140 (for instance a communication device equipped with a display, like a TV display, a Blu-ray player, or set-top box, a tablet or a smartphone) and at least one second communication device 120 (for instance a gateway, a set top box, a content provider server). In the particular embodiment described, the first and second communication devices also belong to the same broadcast network (not illustrated).

Depending upon embodiments, the protocols used to exchange data between the first and second communication devices can vary. For instance, the used protocols can be standard protocols, notably standard protocols based on the Transmission Control Protocol (TCP) and/or the Internet Protocol (IP) like HTTP protocol.

**Figure 2** shows the method for waking up a communication device of the present disclosure, in a particular embodiment. The method can be for instance implemented in the first communication device 110 of Figure 1, that is to be awaken thanks to the waking up service provide by the second communication device of figure 1.

In the illustrated embodiment, the method also includes obtaining 200 at least one waking up criterion. This obtaining is optional. Indeed, in some embodiments, at least some of the criteria used to wake up the first communication device 110 can be unknown of the first communication device 110. It can be the case for example for some maintenance criteria that can be known only by a server in charge of the distant maintenance of a set of devices.

In some embodiments, a waking up criterion can be obtained thanks to a configuration file stored on the first communication device 110 or stored in a storage unit readable from the communication device 100 (like a removable storage unit for instance). In such an embodiment, the obtaining can be performed in a manner transparent to a user of the first communication device 110.

In the embodiment of Figure 2, the obtaining 200 of at least one waking up criterion includes determining (not illustrated) at least one capability, relating to a providing of a waking up service, of at least one waking up service provider (like the second communication device 120 or 122). Such a capability can be received from the communication network, with or without a prior requesting of the first communication device 110. Such a capability can be for instance the capability for the waking up service provider (like the second communication device 120 o 122) of generating a waking up order according to a timer to be set by the first communication device. Another capability can be the capability for the waking up service provider of generating a waking up order according to the category of an Event Information Table (EIT) of a content broadcasted by the second communication device 120, 122 or according to a Program Information Table related to a content broadcasted by a third communication device. This receiving of a capability by the first communication device is optional. For instance, in some embodiments, a capability of a waking up service provider can stored in a medium accessible from the first communication device 110. A waking up criterion can then be defined in function of the capability of the second communication device. For instance, with the examples above, one waking up criterion can be a given value to assign to the timer, or a given category (like "documentary" or "sport") of a EIT, or a key word (like "Finale Euro Volley").

In embodiments comprising an obtaining 200 of at least one waking up criterion, the obtaining can include an acquiring of a waking up criterion, or an acquiring of at least one parameter to be used to define a waking up criterion. Such a parameter can be for instance a timetable or a day of the week to be used to generate an alert. It can be also, as in the embodiment described, a category of broadcasted content being of interest for a user of the first communication device 110. In the illustrated embodiment, the first communication device 110 can acquire, through a user interface, a content category of interest for a user (for instance documentaries about animals). The first communication device can then build a waking up criterion based on this acquired content category and the information present in an Event Information Table (EIT) associated to a broadcasted content. In some embodiments, the acquiring can be performed through a communication interface of the first communication device. For instance, a waking up criterion or a parameter linked to a waking up criterion can be received from a distant device, like a distant configuration server or a remote user interface.

In some embodiments, several waking up criteria can be obtained, or a waking up criterion (called herein a "complex" criterion), can be composed itself of several criteria. For instance, a complex waking up criterion can be constructed as logical operators "OR" or "ON" between several criteria (called herein "simple", or "elementary" criteria. For instance an obtained complex criteria can be expressed as: ("current-time =10.00" OR "current-day=weekday").

The obtaining step 200 can further include obtaining other parameters, for instance some parameters that can used in order to define a contextual information to be used when being waken up.

According to Figure 2, the method includes a sending 210, by the first communication device, of the obtained at least one criterion to another communication device. In the illustrated embodiment, the other communication device can be for instance a communication device (like the second communication device 120 of Figure 1) that will provide a waking up service, like a server used by a content provider that broadcasts contents to communication devices of a broadcast network, and notably to the first communication device 110.

As illustrated by Figure 1, the sending can be performed thanks to intermediate communication devices, like routers or repeaters (like communication devices 112, 130, 148, 144, 142 of Figure 1). The provider of the waking up service can be chosen by the first communication device according to different criteria, for instance according to its awaking capabilities, its availability, a cost of an awaking capability, its performance,....

The sending 210 by the first communication device 110 is optional. Indeed, in some embodiment, as already explained, the first communication device has no knowledge of a waking up criterion. Depending upon embodiments, the sending 210 by the first communication device 110 can be performed in different ways. For instance, the sending performed by the first communication device 110 can involve the sending of a Short Message Signaling (SMS), or a message based on a TCP/IP protocol, like a message HTTP.

In the illustrated embodiment, the method also includes obtaining 220, from the second communication device 120 that will provide the waking up service, at least one waking up item that will be included in a pattern comprised in a wake up order sent by the waking up service provider in order to wake up the first communication device. In some embodiments, obtaining 220 at least one waking up item can include reading a configuration file stored on the first communication device or stored in a storage unit readable from the communication device (like a removable storage unit for instance). In other embodiments, obtaining 220 at least one waking up item can include receiving the wake-up item on a communication interface of the first communication device 110. For instance, the obtaining step 220 can represent receiving a waking up item from a communication device acting as a waking up service provider, such as the second communication device 120 of Figure 1.

In some embodiments, notably in embodiments that involve obtaining 200 several waking up criteria, or at least one complex criterion, composed itself of several criteria, several waking up items can be obtained. Notably, a different waking up item can be received for each simple criteria for a complex criteria being constructed as a result of the logical operator "OR" applied between several simple criteria. Such an embodiment can permit to determine, when being awaken, which simple criterion was met upon the simple criteria that composed the complex criterion. At the point of view of a second communication device in charge of providing a waking up service, such an embodiment can permit to wake up more devices by each wake up order (as less devices are likely to subscribe to a common complex particular criteria than to a common simpler criterion).

In some embodiments, notably in embodiments where the obtaining 220 of a waking up item is performed at least partially by a first part of the first communication device that will be inactive in the sleeping mode, the obtaining 220 can also include a transmitting step 222, of the obtained waking up item, from the first part of the first communication device, to a second part of the first communication device 110 that stays at least partially active in the sleeping mode. For instance, in the illustrated embodiment, the second part staying at least partially active can be an active Ethernet or Wireless Frame analyzer, in charge of analyzing the received packets. The transmitting can include transmitting a physical and/or logical address to be used in order to generate an interruption and wake up an inactive part of the communication device in case of detecting the waking up item in the received packets. In some embodiments, this physical/logical address can vary upon the transmitted waking up items. In other embodiments, the physical/logical address can stay the same for all transmitted waking up item.

In some embodiments, the transmitting 222 of the waking up item (and eventually the logical/and or physical address to be used in order to generate an interruption and wake up an inactive part of the communication device), from the first part of the first communication device to the second part of the first communication device, can be performed not during the obtaining 220 of the waking up item, but later, for instance during the preparing 232 that is described below.

Indeed, according to figure 2, the method includes, when entering 230 in the sleeping mode, preparing 232 a potential waking up due to a forthcoming receiving of an obtained waking up item. The preparing 232 notably includes storing 2322 at least one first contextual information, related to at least one action to be performed when being awaked with this waking up item. Such contextual information can include for instance current state of software variables, content of a software stack, a physical or logical address of a software or firmware routine to be executed and/or an address of a web server from where information related to a forthcoming waking up can be accessed.

As already explained, in some embodiments, the preparing 232 can also include transmitting 222 the waking up item (and eventually the logical/and or physical address to be used in order to generate an interruption and wake up an inactive part of the communication device) to at least one part of the communication device 100, still being active in the sleeping mode, in charge of detecting the waking up pattern in the received frames.

The preparing 232 also can include subscribing 2324 to at least one waking up service associated with the waking up item. For instance, as in the illustrated embodiment, it can be a multicast service. Depending upon embodiments, the subscribing can be performed in different ways. Notably, it can rely on a protocol operating at the "network" layer of the OSI Model. For embodiments where the waking up item includes a MAC address, such a protocol has the advantage of operating as the OSI level in charge of the management of messages according to their MAC address. In the illustrated embodiment, where the subscribing is based on the Internet Group Management Protocol (IGMP), the subscribing includes sending a "JOIN" message comprising the waking up item, through a switching device implementing IGMP snooping feature (not illustrated), to a local multicast router (for instance the device 112 of figure 1), in order for the local multicast router to listen to the transmission of a packet comprising the waking up item on the broadband network. The router can itself send a message comprising the waking up item to another router (for instance by using a Protocol Independent multicast (PIM) message) and so on, according to the routing plan between the first and second communication device.

In the illustrated embodiment, the subscribing 2324 is performed when entering in the sleeping mode. Such an embodiment can present the advantage of avoiding useless configuration of a network routing plan for allowing waking up of a first communication device that will never go to sleeping mode. Also, such an embodiment can permit an action associated to this waking up item to be performed only when the first communication device is not used for another purpose. For instance, if the first communication device is a set top box or a TV monitor, an action performed when receiving a waking up item associated to a waking up criterion related to a planned broadcast of a documentary content in five minutes can be, while waking up the device, to switch the active channel of the first communication device to the channel on which the documentary content will be broadcasted. However, if the set top box or TV monitor is already in use for broadcasting another content (like a film for instance) on another channel, the action should not be performed.

In other embodiment, the subscribing can be performed earlier than the entering 230 in the sleeping mode, for instance just after obtaining 220 the waking up item.

The entering 230 into the sleeping mode also includes a transition to a sleeping mode 234, where at least some component of the first communication device is inactive while another part, like the frame analyzer in the detailed embodiment, is still at least partially active.

According to the detailed embodiment, the method comprises detecting 240 a waking up pattern in a received frame. This detecting can be performed by the frame analyzer. The method also includes moving 250 (or turning) an inactive part of the communication device to an active mode. This moving can include generating at least one interrupt signal, like that from a General Purpose Input Output (GPIO) message. The moving 250 can include unsubscribing 252 to the waking up service. This unsubscribing is optional. Indeed, in some embodiment, the subscription to the waking up service is not removed in order, for the first communication device, to be alerted each time the associated criterion is met.

According to the illustrated embodiment, there are several manners for the first communication device to transition from the sleeping mode to the active mode.

Indeed, the first communication device 110 can be awaken because of the detecting of a received waking up pattern comprising the waking up item or because of other reason. For instance, the transition can result to a manual action for a user of the first communication device 110. When a waking up item has been received 254, the moving 250 include performing 256 at least one first action according to at least one first contextual information stored 232 by the first communication device 110 when entering 230 in the sleeping mode. In embodiments where different contextual information are stored for different waking up items by the first communication device, the adequate first contextual information can be determined thanks to the received waking up item. In order to determine this contextual information, the moving step can include accessing a frame containing the waking up pattern, in a memory of the frame analyzer, in order to get the waking up item (that is to say a multicast MAC address according to the detailed embodiment). In other embodiments, the moving step can include requesting the waking up item, that has just been received, to the second communication device 120, 122. In some embodiments, like in the illustrated embodiment, it can be necessary (either for performing a second action, or for performing the first action) to get another contextual information from another communication device. In such an embodiment, the method includes obtaining 258 at least a second contextual information from another communication device, for instance the second communication device that has sent the waking up order, or a third device. As an example, when a first communication device 110 is awakened because of a fulfilling of a waking up criterion relating to the forthcoming broadcast of a documentary content, the first communication device can obtain some additional information about the broadcasted documentary content (its broadcast channel, its title, its length ...) thanks to a server of the broadcast provider (either a server that provided the waking up service or another server). Those additional information can be used to switch channel on a set top box being waking up or to render this additional information on a display of the awakened communication device.

In the illustrated embodiment, the performing 256, 260 of a first and/or second action can also include accessing some additional parameter stored during the obtaining 200 of the waking up criterion.

**Figure 4** shows the method for providing a waking up service of the present disclosure. In a particular embodiment described, the method for generating a waking up service can be implemented for instance in the second communication device 120, 122 of figure 1. Notably, this second communication device 120, 122can be a server in charge of waking up several communication devices.

As it will be detailed below, a wake up service is associated with at least one wake up criterion and at least one wakeup item. The provider of the waking up service (for instance the second communication device according to the illustrated embodiment) tracks the fulfilling of the waking up criterion, in order to send a waking up order, comprising the waking up item, over the network when the criterion is fulfilled.

In the illustrated embodiment of figure 4, the method includes obtaining 400 at least one waking up criterion for waking up a client device (for instance the first communication device 110, 116, 140). In some embodiments, a criterion can be obtained thanks to a configuration file stored on the second communication device 120 or stored in a storage unit readable from the second communication device 120 (like a removable storage unit for instance). It can be the case for example of a maintenance criterion, such as a flag which value can indicate a need to wake up a plurality of devices in order to upload a new software version.

In some embodiments, the obtaining 400 can include receiving at least one criterion, from the communication device 100 or from another device, for instance, a device in charge of supervising the operation of the communication device 100. In some embodiments, the obtaining 400 can include acquiring from a user interface at least one waking up criterion (like a category of broadcasted content known as being of interest for a user of the communication device 100) and/or at least one parameter to be used to define at least one woke-up criterion. Such a parameter can be for instance a number of minutes defining the moment, before the actual broadcast of a content, where the waking up order will be sent if the content that is going to be broadcasted has a category being of interest for the user.

The method can also include associating 410 the obtained waking up criterion to at least one waking up item that will be used for building a waking up pattern enclosed in a waking up order. Depending on embodiments, when the condition for a waking up corresponds to a complex criterion, composed of several criteria, one or several waking up items can be associated to the complex criteria. Indeed, if the complex criteria corresponds for instance to a logical "or" between several criteria, the same or different waking up item can be associated for each elementary criterion. At the point of view of the communication device in charge of the providing of the waking up service, such an embodiment can permit to wake up more devices by each wake up order (as less devices are likely to subscribe to a common complex particular criteria than to a common simpler criterion).

According to figure 4, the method includes sending 420 at least one waking up item that is being associated to at least one waking up criterion. In some embodiments (as illustrated by a loop in figure 4), where several waking up item can be associated to a given waking up criterion (for instance a complex criterion), several sending can be performed.

This sending of a waking up item 420 is optional. Indeed, in some embodiments, the waking up item can be a given multicast address already known by the communication devices that are to be waken up. Such a given multicast address can be obtained by accessing a configuration file for instance. In other embodiment, the waking up item can be determined dynamically by the second communication device 120. In the illustrated embodiment where a waking up item is a MAC address, the method can include a preliminary allocating of a plurality of IP addresses to the second communication device 120 and a wake up item can be determined by reserving an IP address amongst the allocated IP addresses not already in use (or reserved for a future use, like for another waking up item) by the second communication device 120.

In some embodiments, as illustrated by figure 4, the method includes receiving a subscription request 450 of a particular client device 110, 116, 140 to a multicast waking up service (that is to say a subscription for receiving the waking up order) corresponding to a particular waking up item. In the illustrated embodiment, such a subscription request notably contains the waking up item itself (for instance in the detailed embodiment a multicast MAC address). The particular client device can either be the first communication device 110, 116, 140 itself (that wants to be awaken) or an intermediate device 130, 112, 142, 144, 148 like a router or a repeater involved in the routing plan between the second communication device 120, 122 and the first communication device 110, 116, 140. Depending upon embodiments, different protocols can be used for instance IGMP or PIM protocols. In the embodiment of figure 4, after receiving 450 a subscription, the method also includes incrementing 460 a counter representing the number of subscribers to the waking up service associated with the waking up item.

According to figure 4, the method includes tracking the fulfilling of at least one waking up criterion and, when a waking up criterion is met 430, sending 440 a waking up order in multicast with a multicast address being the waking up item. The tracking and/or the sending 440 are optional when the counter values indicates that no subscriber exists for a waking up service associated to a given waking up criterion.

Depending upon embodiments and upon the waking up criteria to be tracked, different tracking can be performed. For instance, in an embodiment where the second communication device 120, 122 is a content provider that transmits content according to an Electronic Program Guide, known in advance by the second communication device 120, and where the waking up condition is a content with a corresponding EIT having a category equal to "Documentary", the tracking can include determining the broadcast schedule of a content having a "Documentary" category and managing a timer related to this scheduled time, in order to generate the wake up order when the scheduled time happens.

In another embodiment with a similar waking up criterion where the second communication device 120, 122 receives broadcasted content and have no knowledge of the scheduled broadcast time of a particular event, the tracking can include an analyzing step, in real time, of the category part of the EIT of a received content, in view of generating a waking up order when the category is equal to "Documentary".

In still another embodiment, the tracking can be performed at least partially manually. Notably, timer can be armed in relation to a particular waking up order thanks to a user interface of the second communication device 120.

In the illustrated embodiment, the waking up item is a multicast address that is inserted in a waking up pattern sent to the subscribers of the waking up order according to the multicast routing plan of the multicast address.

Depending upon embodiments, the waking up order can be sent differently. Notably, it can be sent according to standard protocols such as Ethernet protocol or Internet Protocol. In the particular embodiment illustrated by figure 4, it can be sent according to IP multicast protocol.

In some embodiment, and similarly to the receiving 450 of a subscription request already described, the method can include receiving a un-subscription request 470 of a particular client device to the waking up service. This un-subscription request can for instance take the form of a LEAVE message according to the IGMP protocol.

In the embodiment of figure 4, the method also includes decrementing 480 the counter related to the number of subscribers to a waking up service associated with a particular waking up criterion and/or item.

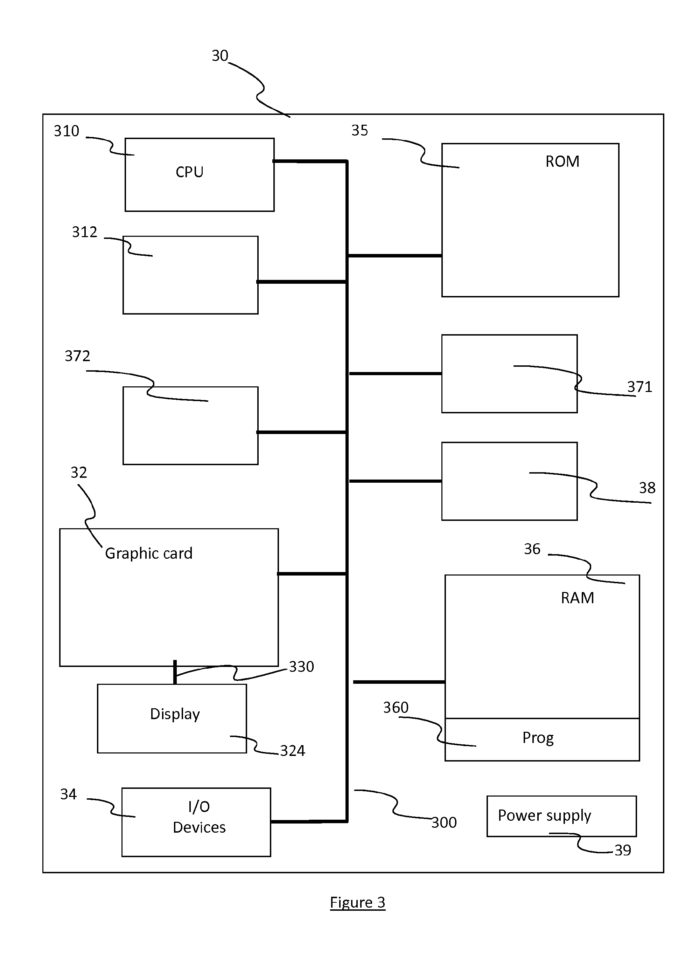

**Figure 3** describes the structure of a communication device 30, for instance the first communication device 110 (acting as a client to a waking up service) or the second communication device 120 (acting as a providing of the waking up service) of figure 1.

In the particular embodiment of figure 3, the communication device can include different devices, linked together via a data and address bus 300, which can also carry a timer signal. For instance, it can include at least one micro-processor 310, 312 (or CPU), a graphics card 32 (depending on embodiments, such a card may be optional), at least one Input/ Output module 34, (to support an external keyboard, a mouse, a led, and so on), a ROM (or « Read Only Memory ») 35, a RAM (or « Random Access Memory ») 36, communication interfaces 371, 372 configured for the reception and/or transmission of data, via a wireless connection (notably of type WIFI®), wired communication interfaces 38 (optional), and a power supply 39.

In some embodiments, the communication device 30 can also include, or be connected to, a display module 324, for instance a screen, directly connected to the graphics card 32 by a dedicated bus 330.

In the illustrated embodiment, the communication device 30 can communicate with another communication device (for instance the second communication device 120 if the communication device 30 is the communication device 110) thanks to a wireless interface.

Each of the mentioned memories can include at least one register, that is to say a memory zone of low capacity (a few binary data) or high capacity (with a capability of storage of a whole program or of all or part of data representative of data to be calculated or displayed).

When the communication device 30 is powered on, the microprocessor 310, 312 loads the program instructions 360 in a register of the RAM 36, notably the processes needed for performing at least one embodiment of the launching method described herein, and executes the program instructions.

According to a variant, the communication device 30 includes several microprocessors. According to another variant, the power supply 39 is external to the communication device 30.

In some embodiments, for instance in embodiments where the communication device 30 is the first communication device 110 of figure 1, and is adapted to work in an operational mode and in a sleeping mode where at last one first module of said communication device is inactive, the communication device can include a frame analyzer, including a first microprocessor 310, adapted to:
- detect at least one waking up item in at least one frame received from a communication interface of said communication device;
- send a signal for waking up said first module when a wake up item is detected and said communication device is in said sleeping mode;
   and the first module can include a second microprocessor 312 that can be configured to:
- subscribe to at least one waking up service associated with said waking up item;
- store, when said communication device enters in said sleeping mode, at least one first contextual information related to at least one first action to be performed when the waking up order is received.

Depending upon embodiment, the processor 310, 312 can be included in the frame analyzer, in the first module and/or in a second module of communication device.

In some embodiments, for instance in embodiments where the communication device 30 is the second communication device 120 of figure 1, that provides a waking up service, the at least one microprocessor 310, 312 can be configured collectively to:
- receive a request of subscribing to at least one waking up service associated with a waking up criterion and with a waking up item;
- send said waking up order on said communication network when said waking up criterion is fulfilled.

In some embodiments, the at least one microprocessor 310, 312 is configured for receiving said waking up criterion, prior to said sending of said waking up order.

The communication device 30 can notably belong to a communication system further comprising at least another communication device (notably a communication device according to any embodiment of the present disclosure).

The present disclosure has been described in relation with some standard protocols.

Of course, as it will be understandable for a person skilled in the art, the present disclosure may also been applied in a communication system using other network protocols.

As will be appreciated by one skilled in the art, aspects of the present principles can be embodied as a system, method, or computer readable medium. Accordingly, aspects of the present disclosure can take the form of an hardware embodiment, a software embodiment (including firmware, resident software, micro-code, and so forth), or an embodiment combining software and hardware aspects that can all generally be referred to herein as a "circuit", module" or "system". Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage mediums to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it will be appreciated by those skilled in the art that the block diagrams presented herein represent conceptual views of illustrative system components and/or circuitry of some embodiments of the present principles. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

## Claims

1. A waking up method, to be performed in a communication device belonging to a communication network, said communication device being adapted to work in an operational mode and a sleeping mode where said communication device is partially inactive, a transition from said sleeping mode to said operational mode being performed when said communication device receives a waking up order comprising a waking up item from said communication network, said method being **characterized in that** it comprises:
- subscribing to at least one waking up service associated with said waking up item;
- when entering in said sleeping mode, storing at least one first contextual information related to at least one first action to be performed when said waking up order is received.

2. The method according to claim 1 **characterized in that** it comprises moving to said operational mode when a waking up order comprising said waking up item is received, said moving comprising performing said first action according to said stored first contextual information.

3. The method according to claim 1 or 2 **characterized in that** said subscribing is performed when entering in said sleeping mode.

4. The method according to any of claims 1 to 3 **characterized in that** said subscribing comprises preparing the routing of said waking up order inside said network.
The method according to claim 4 **characterized in that** said preparing comprises sending an Internet Group Management Protocol join message.

5. The method according to any of claims 1 to 4 **characterized in that** said method comprises sending a waking up request comprising said waking up criterion.

6. The method according to any of claims 1 to 5 **characterized in that** said method comprises, prior to said subscribing, receiving said waking up item.

7. The method according to any of claims 1 to 6 **characterized in that** said moving comprises requesting at least one second contextual information.

8. The method according to any of claims 1 to 7 **characterized in that** said moving comprises receiving at least one second contextual information.

9. The method according to claim 8 **characterized in that** said moving comprises performing at least one second action according to said received second contextual information.

10. A communication device adapted to work in an operational mode and in a sleeping mode where at least one first module of said communication device is inactive, said communication device being **characterized in that** it comprises:
a frame analyzer adapted to:
• detect at least one waking up item in at least one frame received from at least one communication interface of said communication device;
• send a signal for waking up said first module when said wake up item is detected and said communication device is in said sleeping mode; and
at last one processor configured to collectively :
• subscribe to at least one waking up service associated with said waking up item;
• store, when said communication device enters in said sleeping mode, at least one first contextual information related to at least one first action to be performed when said waking up order is received.

11. A method for providing a waking up service, to be performed in a communication device belonging to a communication network, said method comprising:
- receiving a request of subscribing to at least one waking up service associated with a waking up criterion and with a waking up item;
- sending a waking up order comprising said waking up item on said communication network when said waking up criterion is fulfilled;
said method being **characterized in that** it comprises, prior to said sending of said waking up order, receiving said waking up criterion.

12. A communication device for providing a waking up service, said communication device belonging to a communication network and comprising at least one processor configured collectively to
- receive a request of subscribing to at least one waking up service associated with a waking up criterion and with a waking up item;
- send said waking up order on said communication network when said waking up criterion is fulfilled;
said communication device being **characterized in that** said at least one processor is configured collectively for receiving said waking up criterion, prior to said sending of said waking up order.

13. A system, comprising a least one first and one second communication device belonging to at least one communication network, for providing a waking service to said first communication device thanks to said second communication device, said first communication device being adapted to work in an operational mode and in a sleeping mode where at least one first module of said first communication device is inactive, and said second communication device comprising at least one second processor configured collectively to:
- receive a request of subscribing to at least one waking up service associated with a waking up criterion and with a waking up item;
- send said waking up order on said communication network when said waking up criterion is fulfilled;
said system being **characterized in that** said first communication device comprises:
- a frame analyzer adapted to:
• detect said waking up item in at least one frame received from at least one communication interface of said first communication device;
• send a signal for waking up said first module when said wake up item is detected and said first communication device is in said sleeping mode; and
- at least one first processor configured to collectively :
• subscribe to said waking up service;
• store, when said communication device enters in said sleeping mode, at least one first contextual information related to at least one first action to be performed when said waking up order is received; and
said at least one second processor is configured collectively to receive said waking up criterion, prior to said sending of said waking up order.

14. A non-transitory computer readable program product, **characterized in that** it comprises program code instructions for performing the method according to at least one of claims 1 to 9 and/or the method according to claim 11, when said non-transitory software program is executed by a computer.

15. Computer readable storage medium carrying a software program **characterized in that** it comprises program code instructions for performing the method according to at least one of claims 1 to 9 and/or the method according to claim 11, when said non-transitory software program is executed by a computer.
